# EUROPÄISCHE PATENTSCHRIFT

(11) **EP 1 569 837 B1**
(45) Veröffentlichungstag und Bekanntmachung des Hinweises auf die Patenterteilung: **09.07.2008**
(21) Anmeldenummer: 03782239.2
(22) Anmeldetag: 27.11.2003
(51) Int. Cl.: B62D 5/083

(54) **VENTIL FÜR EINE HYDRAULISCHE SERVOLENKUNG**
VALVE FOR A HYDRAULIC POWER STEERING MECHANISM
SOUPAPE POUR DIRECTION ASSISTEE HYDRAULIQUE

(30) Priorität: 03.12.2002 DE 20218733 U
(43) Veröffentlichungstag der Anmeldung: 07.09.2005
(73) Patentinhaber: TRW Automotive GmbH, 73553 Alfdorf (DE)
(72) Erfinder: BÖCKER, Martin, 41352 Korschenbroich (DE)
(74) Vertreter: Sties, Jochen
(86) Internationale Anmeldenummer: PCT/EP2003/013369
(87) Internationale Veröffentlichungsnummer: WO 2004/051120

(56) Entgegenhaltungen:
- DE-A- 19 615 543
- DE-A- 19 828 816
- DE-C- 19 517 871
- GB-A- 2 057 371
- US-A- 5 870 941

## Beschreibung

Die Erfindung betrifft ein Ventil für eine hydraulische Servolenkung.

Bei hydraulischen Servolenkungen werden üblicherweise hydraulische Drehschieberventile verwendet, bei denen ein Ventilelement mit einer Eingangswelle des Ventils und ein zweites Ventilelement mit einer Ausgangswelle des Ventils verbunden ist. Die Eingangswelle ist mit dem Lenkrad verbunden, und die Ausgangswelle ist mit einem Ritzel verbunden, das Teil eines Lenkgetriebes ist. Die Eingangswelle und die Ausgangswelle sind üblicherweise durch einen Torsionsstab miteinander gekoppelt, so daß sie relativ zueinander verdreht werden können, wenn das Widerstandsmoment des Torsionsstabes überwunden wird. Der Torsionsstab gibt gleichzeitig eine Mittellage des Ventils vor, in der das Ventil keine Servounterstützung bereitstellt. Wenn die Eingangswelle und die Ausgangswelle und damit die beiden Ventilelemente relativ zueinander verdreht werden, ergibt sich ein Hydraulikstrom in der einen oder anderen Richtung, der in eine Servounterstützungskraft umgesetzt werden kann.

Es gibt derzeit viele Anstrengungen, die bekannten Servolenkungen dahingehend weiterzuentwickeln, daß der vom Benutzer vorgegebenen Servounterstützungskraft eine von einer Steuereinheit bestimmte Servounterstützungskraft überlagert werden kann. Auf diese Weise kann die Lenkcharakteristik der Servolenkung in vielfältiger Weise beeinflusst werden, so daß beispielsweise das am Lenkrad gefühlte Drehmoment beeinflusst werden kann, die Ventilcharakteristik modifiziert werden kann, die Rückstellung in die Mittellage beeinflusst werden kann, eine Dämpfung erzeugt werden kann, eine automatische Betätigung des Lenkgetriebes erzielt werden kann, eine Fehljustierung der Mittellage kompensiert werden kann, einer von den Rädern herrührenden Kraft, beispielsweise aufgrund eines einseitigen Druckverlusts im Reifen oder eines Bremsvorgangs mit unterschiedlichen Reibwerten auf der einen und der anderen Seite des Fahrzeugs, entgegengewirkt werden kann oder ungleichmäßige Radlasten gedämpft werden können. Die Lenkcharakteristik eines Drehschieberventils kann dadurch beeinflusst werden, daß eines der Ventilelemente, üblicherweise die mit der Ausgangswelle und damit dem Ritzel verbundene Ventilhülse, nicht fest an der Ausgangswelle angebracht ist, sondern relativ zu dieser verdrehbar ist. Die Verdrehung der Ventilhülse relativ zur Ausgangswelle kann durch einen Elektromotor oder durch Spulen hervorgerufen werden, welche die Ventilhülse durch elektromagnetische Kräfte verstellen.

Ein Beispiel für ein solches Servolenkventil findet sich in der DE 198 28 816 A1. Dort wird in einer Ausführungsform ein Elektromotor und in einer anderen Ausführungsform ein hydraulischer Stellkolben verwendet, um die Ventilhülse aktiv relativ zur Ventilwelle verdrehen zu können.

Eine solche aktive Drehung der Ventilhülse wirft jedoch zwei Probleme auf. Das erste Problem besteht darin, daß die Position der Ventilhülse mit sehr hoher Winkelgenauigkeit gesteuert werden muß. Da sich die Ausgangswelle zwischen den beiden Lenkanschlägen üblicherweise um vier Umdrehungen drehen kann, muß die Antriebsvorrichtung für die Ventilhülse in der Lage sein, diese über einen Winkelbereich von 3 bis 4 Lenkradumdrehungen mit einer Genauigkeit in der Größenordnung von 0,02° zu verdrehen. Dies erfordert einen sehr aufwendigen Winkelsensor, der mit der erforderlichen Genauigkeit arbeiten kann. Das zweite Problem betrifft die Ausfallsicherheit. Falls die Antriebsvorrichtung ausfällt, kann die Winkelstellung der Ventilhülse nicht mehr vorhergesagt werden, so daß die Servolenkung nicht mehr korrekt arbeiten kann. Im schlimmsten Fall verliert der Fahrer die Kontrolle über das Fahrzeug.

Die Aufgabe der Erfindung besteht darin, ein Ventil für ein Servolenkungssystem zu schaffen, bei dem zwar eine aktive Beeinflussung eines Ventilelements möglich ist, um die Ventilcharakteristik und damit die Lenkcharakteristik in einer gewünschten Weise zu beeinflussen, jedoch gleichzeitig eine große Ausfallsicherheit verbunden mit geringen Anforderungen an die Präzision der verwendeten Antriebsvorrichtung erreicht wird.

Zu diesem Zweck ist erfindungsgemäß ein Ventil für eine hydraulische Servolenkung vorgesehen, mit einem ersten Ventilelement und einem zweiten Ventilelement, die mittels eines Torsionsstabes miteinander verbunden sind und aus einer Mittellage in die eine oder andere Richtung relativ zueinander begrenzt verdrehbar sind, um eine Lenkunterstützung zu erzeugen, wobei eines der Ventilelemente aus einer Neutrallage in die eine oder andere Richtung relativ zu einer ihm zugeordneten Welle verdrehbar ist, wobei ein Kopplungsmechanismus vorgesehen ist, der die Verdrehung des Ventilelements relativ zur Welle begrenzt und das Ventilelement in die Neutrallage beaufschlagt, und wobei eine Antriebsvorrichtung vorgesehen ist, die auf das dem Kopplungsmechanismus zugeordnete Ventilelement einwirken kann, um es relativ zur Welle aus der Neutralstellung in die eine oder andere Richtung zu verdrehen. Die Erfindung beruht auf dem Grundgedanken, das zur Beeinflussung der Ventilcharakteristik verdrehbare Ventilelement grundsätzlich in die Neutrallage zu beaufschlagen, die es auch einnehmen würde, wenn es fest mit der ihm zugeordneten Welle verbunden wäre. Aus dieser Neutrallage ist das Ventilelement in die eine oder andere Richtung verdrehbar, wobei zum Verdrehen Rückstellkräfte überwunden werden müssen. Diese Rückstellkräfte sind so groß, daß sie, wenn auf das verdrehbare Ventilelement keine Kräfte von der Antriebsvorrichtung ausgeübt werden, das verdrehbare Ventilelement in der Neutrallage halten. Auf diese Weise ergibt sich eine extrem hohe Ausfallsicherheit. Sobald nämlich die Antriebsvorrichtung für das verdrehbare Ventilelement nicht mehr arbeitet, verbleibt dieses in seiner Neutrallage, so daß das Ventil in konventioneller Weise arbeiten kann. Durch die Beaufschlagung in die Neutrallage wird außerdem vermieden, daß das verdrehbare Ventilelement aktiv bei jeder Betätigung des Ventils in die aktuelle Sollstellung nachgesteuert wird. Statt dessen ist es ausreichend, das verdrehbare Ventilelement nur dann aus seiner Neutrallage heraus zu verstellen, wenn die Ventilcharakteristik beeinflusst werden soll.

Gemäß einer Ausführungsform der Erfindung weist der Kopplungsmechanismus zwei Federn auf, die in der Umfangsrichtung der Welle wirken, wobei das dem Kopplungsmechanismus zugeordnete Ventilelement mit einem Anschlag versehen ist, wobei an der Welle zwei Widerlager vorgesehen sind, von denen eines auf der einen und das andere auf der anderen Seite des Anschlags angeordnet ist, und wobei eine der beiden Federn zwischen dem einen Widerlager und dem Anschlag und die andere Feder zwischen dem Anschlag und dem anderen Widerlager angeordnet ist. Bei dieser Ausführungsform ergibt sich ein sehr kompakter Aufbau, mit dem das verdrehbare Ventilelement zuverlässig in die Neutrallage beaufschlagt werden kann.

Gemäß einer bevorzugten Ausführungsform der Erfindung ist vorgesehen, daß das dem Kopplungsmechanismus zugeordnete Ventilelement mit einem Schlitz versehen ist, der schräg zur Längsrichtung der Welle ausgerichtet ist, daß die Welle mit einem Zapfen versehen ist, der in den Schlitz eingreift, und daß zwei Federn jeweils zwischen einer axialen Stirnseite des Ventilelements und einem gegenüberliegenden Widerlager angeordnet sind. Bei dieser Ausführungsform erfolgt die Kopplung zwischen der Welle und dem verdrehbaren Ventilelement durch eine Schlitzführung, wobei die von der Schlitzführung im Betrieb auf die Ventilhülse ausgeübten, parallel zur Längsachse der Welle wirkenden Kräfte kleiner sind als die von den beiden Federn ausgeübten Kräfte. Auf diese Weise ist die Ventilhülse grundsätzlich auf ihre Neutrallage zentriert, und es ergibt sich eine Selbsthemmung durch Reibung.

Gemäß einer wiederum weiteren Ausführungsform der Erfindung ist vorgesehen, daß der Kopplungsmechanismus einen Federring aufweist, der mit mehreren Laschen versehen und an der Welle angebracht ist, und daß das dem Kopplungsmechanismus zugeordnete Ventilelement mehrere Nasen aufweist, die mit den Laschen zusammenwirken. Der Federring kann aus Kunststoff oder einem Elastomer bestehen. Dieser Aufbau erinnert an eine Klauenkupplung mit Dämpfungselementen und ermöglicht die erforderliche Relativdrehung zwischen dem Ventilelement und der Welle.

Vorteilhafte Ausgestaltungen der Erfindung ergeben sich aus den Unteransprüchen.

Die Erfindung wird nachfolgend anhand verschiedener Ausführungsformen beschrieben, die in den beigefügten Zeichnungen dargestellt sind. In diesen zeigen:
- Figur 1 in einer schematischen Ansicht ein Lenkgetriebe mit einem Ventil gemäß einer ersten Ausführungsform der Erfindung;
- Figur 2 ein Detail eines Ventils gemäß einer zweiten Ausführungsform der Erfindung;
- Figur 3 ein Lenkgetriebe mit einem Ventil gemäß einer dritten Ausführungsform der Erfindung;
- die Figuren 4 bis 12 verschiedene Ausführungsformen eines Lenkgetriebes mit unterschiedlichen Antriebsvorrichtungen.

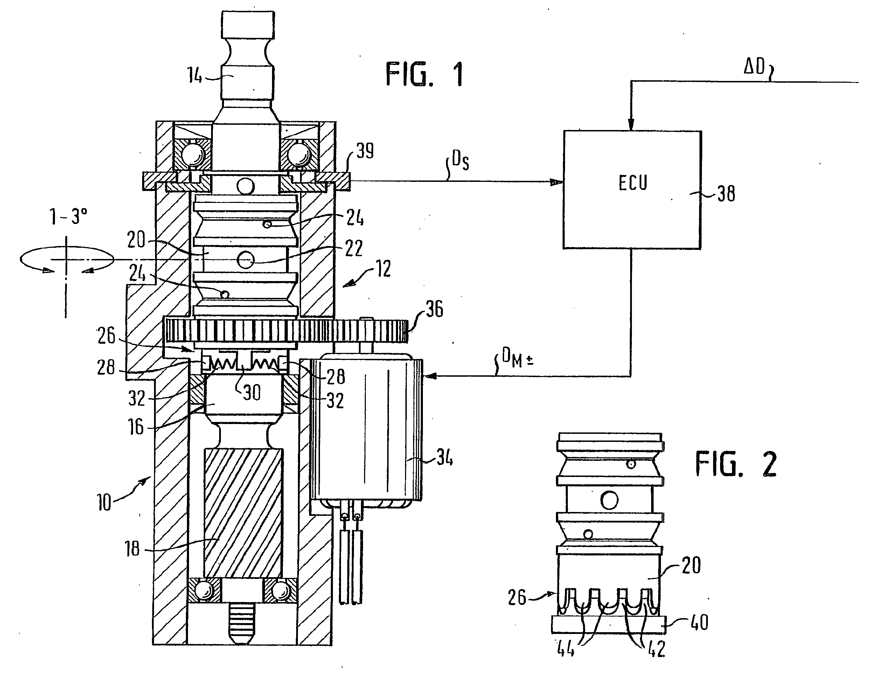

In Figur 1 ist ein Lenkgetriebe 10 gezeigt, das ein Ventil 12 aufweist, mit dem eine Servounterstützung bestimmt werden kann. Das Lenkgetriebe 10 weist eine Eingangswelle 14 auf, die von einem Lenkrad betätigt wird, und eine Ausgangswelle 16, die mit einem Ritzel 18 versehen ist. Das Ritzel 18 greift in eine (nicht dargestellte) Zahnstange ein, mit der die lenkbaren Räder eines Fahrzeugs verschwenkt werden.

Zwischen der Eingangswelle 14 und der Ausgangswelle 16 ist ein (nicht dargestellter) Torsionsstab angeordnet, der die beiden Wellen derart miteinander verbindet, daß sie unter Überwindung des Torsionswiderstandes des Torsionsstabes relativ zueinander verdreht werden können. Die Eingangswelle 14 ist ferner mit einer (in der Darstellung von Figur 1 nicht sichtbaren) inneren Ventilhülse versehen, die drehfest mit der Eingangswelle 14 verbunden ist. Um die innere Ventilhülse herum erstreckt sich eine äußere Ventilhülse 20, die mit einer Zulaufbohrung 22 und zwei Ablaufbohrungen 24 versehen ist. Wenn sich die beiden Ventilhülsen in einer Mittellage befinden, werden die beiden Ablaufbohrungen 24 symmetrisch mit einem Hydraulikfluid versorgt, das über die Zulaufbohrung 22 zugeführt wird. Dies ist aus dem Stand der Technik allgemein bekannt und wird hier nicht weiter erläutert.

Die äußere Ventilhülse 20 ist drehbar auf der Ausgangswelle 16 angeordnet und mit dieser durch einen Kopplungsmechanismus 26 verbunden. Der Kopplungsmechanismus 26 besteht hier aus zwei Widerlagern 28, die fest an der Ausgangswelle 16 angebracht sind, einem Anschlag 30, der fest an der äußeren Ventilhülse 20 angebracht ist, und zwei Federn 32, die in Umfangsrichtung zwischen dem einen Widerlager und dem Anschlag 30 sowie zwischen dem Anschlag 30 und dem zweiten Widerlager 28 angeordnet sind. Der Kopplungsmechanismus 26 zentriert die äußere Ventilhülse 20 relativ zur Ausgangswelle 16 in eine Neutrallage, die der Lage entspricht, in der die äußere Ventilhülse bei herkömmlichen Ventilen fest mit der Ausgangswelle 16 verbunden ist. Der mögliche Drehwinkel der äußeren Ventilhülse 20 relativ zur Ausgangswelle 16 beträgt in der Größenordnung von 1° bis 4°.

Es ist ein Antriebsmotor 34 vorgesehen, der über ein Zahnradgetriebe 36 mit der äußeren Ventilhülse 20 verbunden ist. Alternativ kann auch ein Riementrieb verwendet werden.

Ferner ist eine elektronische Steuereinheit 38 vorgesehen, die von einem Drehmomentsensor 39 Informationen über das Lenkdrehmoment Dₛ und ein zur Änderung der Lenkcharakteristik gewünschtes Korrekturdrehmoment ΔD empfängt. Für autonomes Lenken ist noch ein (nicht dargestellter) Winkelsensor vorgesehen. Im Gegenzug gibt die Steuereinheit ein Signal zur Erzeugung eines Motordrehmomentes D_{M±} ab, das auf die äußere Ventilhülse 20 übertragen werden kann.

Im Normalbetrieb ist der Antriebsmotor 34 frei drehbar, so daß er sich bei Lenkbewegungen entsprechend der dann erfolgenden Drehung der äußeren Ventilhülse 20 mitdreht. Die Federn 32 sind zu diesem Zweck so steif ausgelegt, daß das zum Verdrehen der Ventilhülse 20 aus ihrer Neutrallage erforderliche Drehmoment größer ist als das Schleppmoment des Antriebsmotors 34. Somit arbeitet das Ventil 12 in konventioneller Weise.

Wenn festgestellt wird, daß die Lenkcharakteristik beeinflußt werden soll, wird der Antriebsmotor 34 in der einen oder anderen Richtung betrieben. Dadurch wird die Ventilhülse 20 aus ihrer Neutrallage herausbewegt, so daß sich die Relativstellung zwischen der inneren Ventilhülse und der äußeren Ventilhülse ändert.

Sollte die Steuereinheit 38 oder der Antriebsmotor 34 ausfallen, beeinträchtigt dies die sichere Funktion des Ventils 12 nicht, da dann die Ventilhülse 20 in ihrer Neutralstellung verbleibt.

In Figur 2 ist eine Variante zur in Figur 1 gezeigten Ausführungsform dargestellt. Der Unterschied besteht darin, daß der Kopplungsmechanismus 26 anstelle der bei der ersten Ausführungsform vorgesehenen Federn einen Federring 40 aufweist, der aus Kunststoff oder einem Elastomermaterial besteht. Der Federring 40 ist fest mit der Ausgangswelle 16 verbunden und weist mehrere Laschen 42 auf, die sich in axialer Richtung zwischen mehrere Nasen 44 erstrecken, die an der äußeren Ventilhülse 20 angebracht sind. Auch dieser Kopplungsmechanismus hält die äußere Ventilhülse 20 in einer Neutrallage relativ zur Ausgangswelle 16, während gleichzeitig eine Verdrehung um einen begrenzten Winkelbereich in der einen oder anderen Richtung möglich ist.

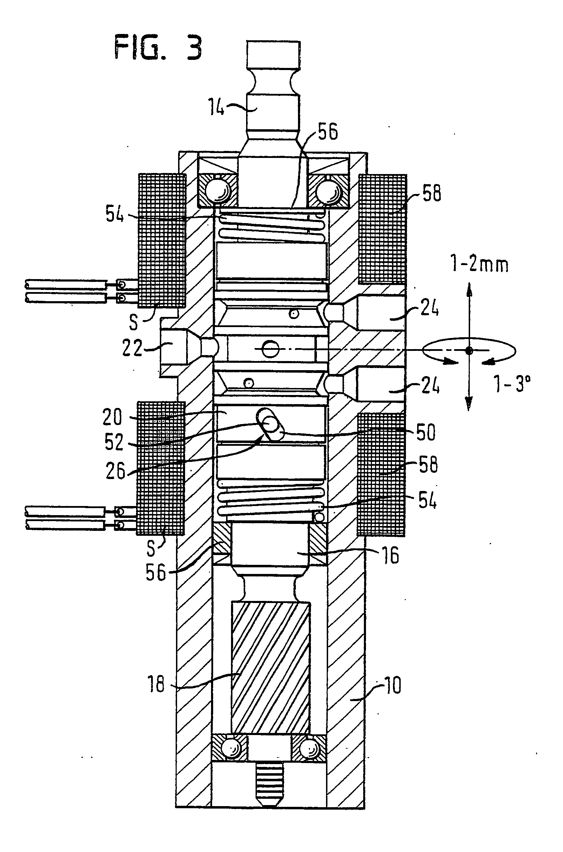

In Figur 3 ist eine dritte Ausführungsform gezeigt. Für die von der ersten Ausführungsform bekannten Bauteile werden dieselben Bezugszeichen verwendet, und es wird insoweit auf die obigen Erläuterungen verwiesen.

Der Unterschied zu den beiden vorangegangenen Ausführungsformen besteht darin, daß der Kopplungsmechanismus im wesentlichen aus einer Schlitzführung besteht, die hier durch einen Schlitz 50 in der äußeren Ventilhülse 20 und einen Zapfen 52 gebildet ist, der in die Ausgangswelle 16 eingesetzt ist. Natürlich wäre auch die umgekehrte Anordnung mit einem Schlitz in der Ausgangswelle und einem Zapfen in der Ventilhülse denkbar. Der Schlitz 52 erstreckt sich geradlinig, wobei seine Längsachse schräg zur Längsachse der Ausgangswelle 16 angeordnet ist. Bei der gezeigten Ausführungsform beträgt dieser Winkel rund 30°. Anstelle eines geradlinigen Schlitzes kann auch ein gekrümmter Schlitz verwendet werden. Auf diese Weise kann auch ein nichtlineares Übersetzungsverhältnis erzielt werden.

An jeder Stirnseite der Ventilhülse 20 ist eine Feder 54 angeordnet, deren von der Ventilhülse abgewandtes Ende jeweils gegen ein Widerlager 56 vorgespannt ist. Die Federn 54 beaufschlagen die Ventilhülse 20 entlang der Längsachse der Ausgangswelle 16 in ihre Neutrallage.

Um das Ventil herum sind zwei Spulen 58 angeordnet, die es ermöglichen, die Ventilhülse 20 durch elektromagnetische Kräfte parallel zur Längsachse der Ausgangswelle 16 in der einen oder anderen Richtung aus einer Neutrallage heraus zu verstellen. Die Spulen 58 sind mit der Steuereinheit 38 verbunden.

Wenn von den Spulen keine Kraft auf die Ventilhülse 20 ausgeübt wird, verbleibt diese bei jeder Betätigung des Lenkgetriebes in ihrer Neutrallage, in die sie von den Federn 54 beaufschlagt wird. Zwar übt der Zapfen 52, über den Schlitz 50, bei jeder Verdrehung der Ausgangswelle 16 eine Kraft auf die Ventilhülse 20 aus. Die parallel zur Längsrichtung der Ausgangswelle 16 gerichtete Komponente dieser Kraft ist jedoch nicht ausreichend, um die Ventilhülse 20 in Längsrichtung entgegen der Wirkung der Federn 54 und auch entgegen der zwischen dem Schlitz 50 und dem Zapfen 52 herrschenden Reibung zu verstellen. Somit verbleibt die Ventilhülse 20 auch in ihrer der Neutrallage entsprechenden Winkelstellung.

Wenn die Lenkcharakteristik des Ventils beeinflußt werden soll, werden die Spulen 58 erregt. Dadurch wird die Ventilhülse 20 in axialer Richtung verschoben, was durch die schräge Führung des Zapfens 52 im Schlitz 50 in eine Verdrehung der Ventilhülse 20 relativ zur Ausgangswelle 16 umgesetzt wird.

Gemäß einer nicht dargestellten Ausführungsvariante kann die Ventilhülse auch verlängert ausgeführt werden, wobei der verlängerte Abschnitt als Kolben wirkt. Auch dies ermöglicht es, auf die Ventilhülse in der gewünschten Weise einzuwirken.

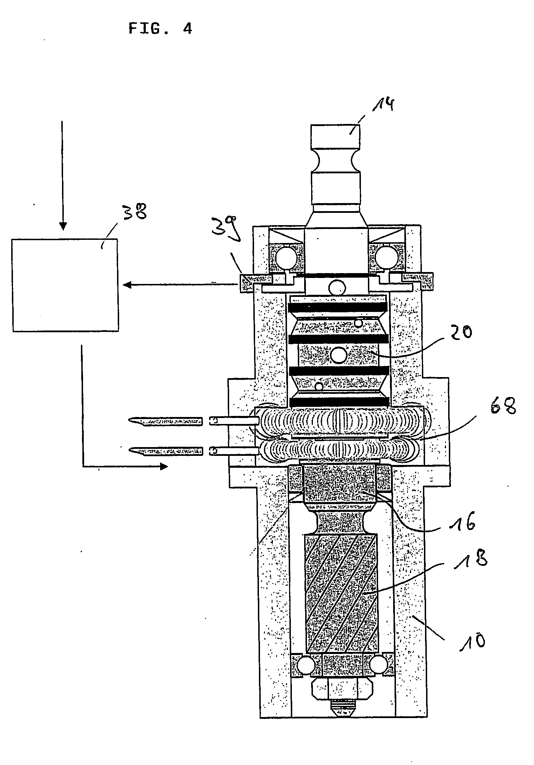

In Fig. 4 ist eine weitere Ausführungsform des Ventils gezeigt, wobei hier eine Antriebsvorrichtung 68 verwendet wird, die aus koaxial um die Ventilachse herum angeordneten Spulen besteht.

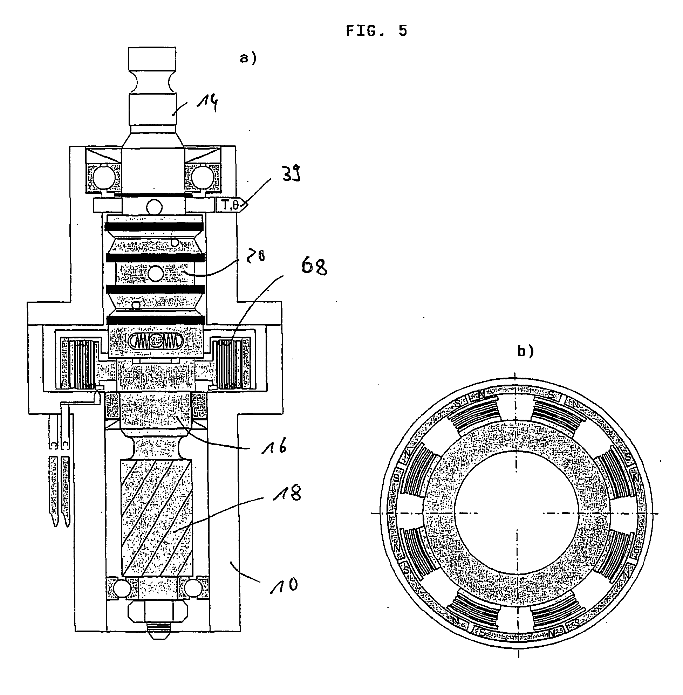

In Fig. 5 ist eine Ausführungsform des Ventils gezeigt, bei welchem als Antriebsvorrichtung 68 zwei Rotoren eines Elektromotors verwendet werden. Ein Rotor trägt dabei z. B. die Permanentmagnete, der andere die Polspulen. Analog zum Elektromotor entsteht das Verstellmoment durch die Kräfte, die auf einen stromdurchflossenen Leiter im magnetischen Feld wirken. Bei der gezeigten Ausführungsform sind die Permanentmagnete an einem fest mit der Ventilhülse verbundenen Halter angeordnet, und die Spulen sind auf einem fest mit der Welle 16 verbundenen Halter angebracht. Durch die hohe Polanzahl ergibt sich ein hohes Drehmoment, das durch in axialer Richtung längere Pole weiter erhöht werden kann. Zur Energieversorgung kann ein elektrisches Kabel oder können Schleifkontakte verwendet werden.

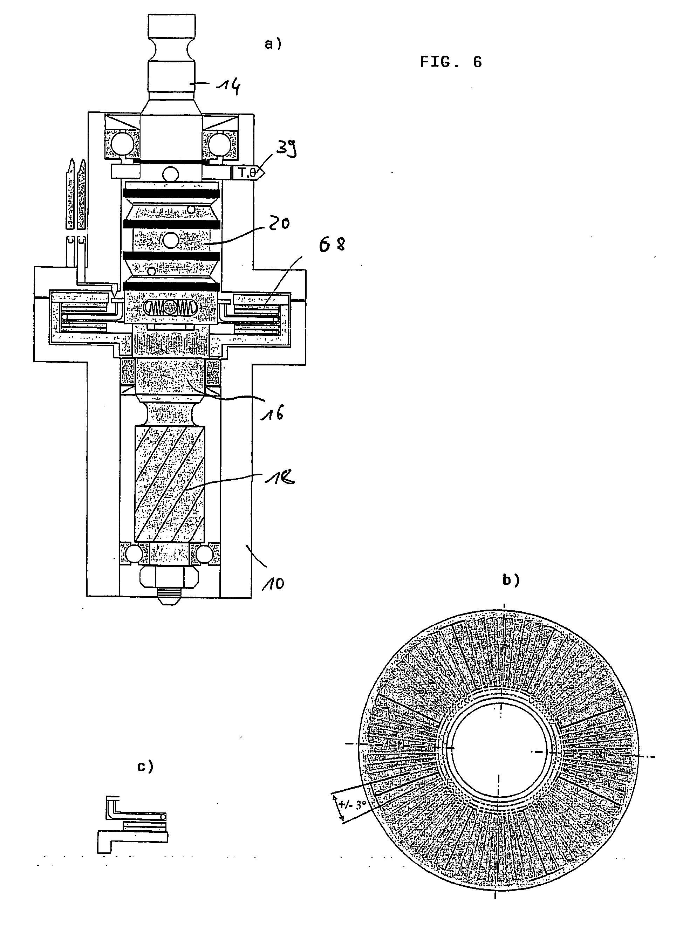

In Fig. 6 ist eine weitere Ausführungsform des Ventils mit der Antriebsvorrichtung 68 gezeigt. Für die Antriebsvorrichtung wird ein Elektromotor mit einem Scheibenläufer und axialen Fluß durch die Spulen verwendet. Die Spulen befinden sich dabei auf einer nichtmetallischen Läuferscheibe aus z. B. Kunststoff, was aufgrund des geringeren Trägheitsmomentes eine höhere Stelldynamik ermöglicht. Für die Anordnung der beiden Rotoren bestehen grundsätzlich verschiedene Möglichkeiten. Der Rotor mit den Permanentmagneten kann sich auf der Ventilhülse befinden, und der Rotor mit den Spulen kann auf der Welle 16 angeordnet sein. Falls eine geringere Effizienz ausrecht, kann anstelle der gezeigten beiden Magnetschichten nur eine einzige Magnetschicht verwendet werden. Dies ist in Fig. c) gezeigt.

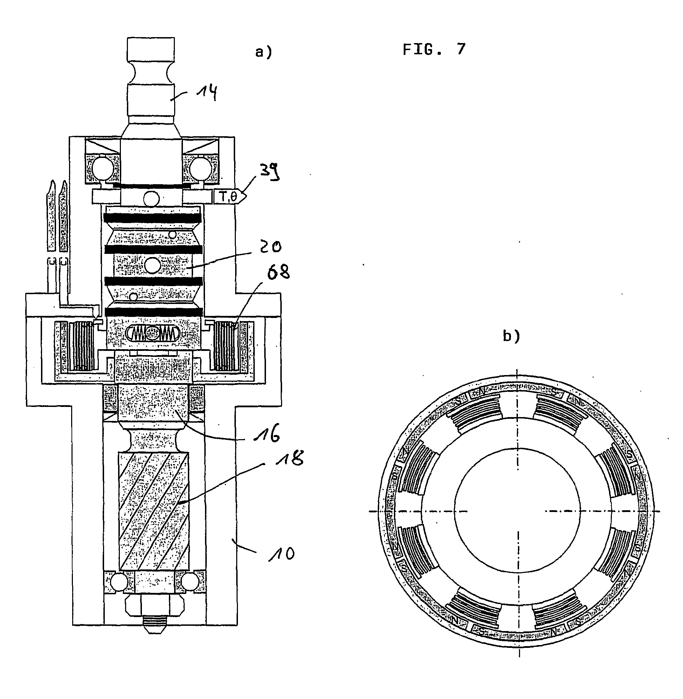

In Fig. 7 ist eine Ausführungsform gezeigt, bei der die Permanentmagnete an einem Halter angebracht sind, der mit der Welle 16 in Verbindung steht. Die Spulen sind an einem Halter angebracht, der fest an der Ventilhülse vorgesehen ist.

Vorteilhaft bei den in den Figuren 4 bis 7 gezeigten Ausführungsformen ist, daß die Antriebsvorrichtung 68 nur den zusätzlichen, aktiv angesteuerten Ventilverdrehwinkel von etwa plus minus 3° aufbringen muß. Bei übergeordneten Lenkwinkeln von z. B. 700° in der einen oder anderen Richtung bewegen sich die beiden Rotoren synchron. Somit ist keine Kommutierung notwendig, es tritt also keine störende Drehmomentschwankung auf. Nachteilig ist allerdings, daß die Spulen über Schleifer oder über eine Kabelschleife bestromt werden müssen.

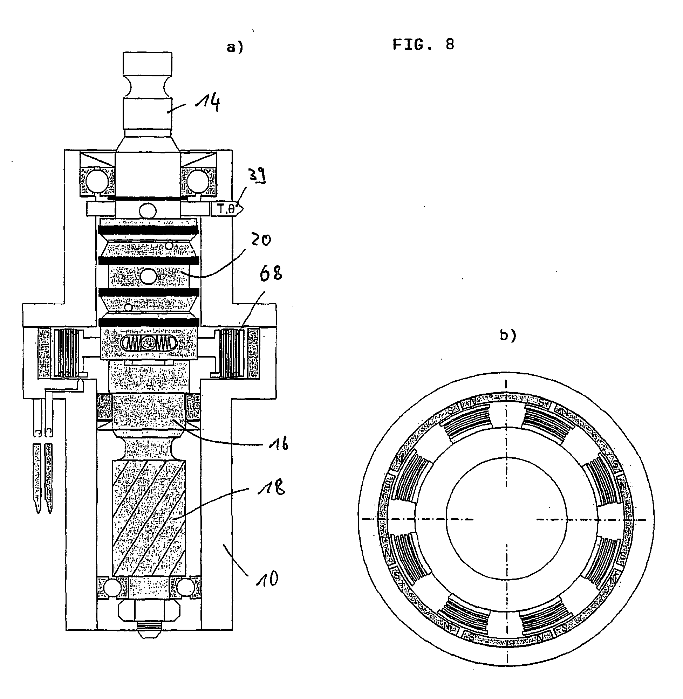

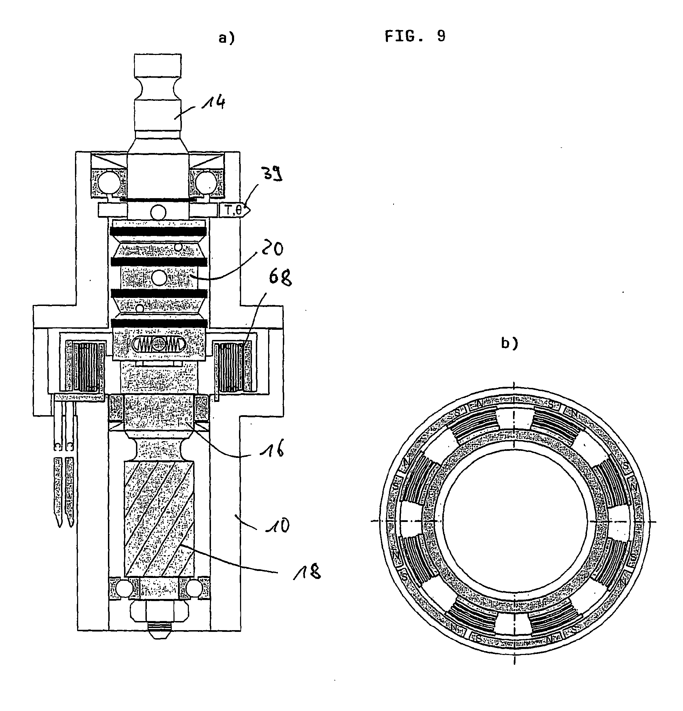

Im Gegensatz zu den in Figuren 4 bis 7 gezeigten Ausführungsformen kann einer der beiden Rotoren auch am Gehäuse des Ventils angebracht werden, und zwar entweder der Permanentmagnetring (siehe Fig. 8) oder die Spulen (siehe Fig. 9). Nachteilig bei diesen beiden Ausführungsformen ist, daß die Antriebsvorrichtung den kleinen Ventilverstellwinkel und zusätzlich den großen, übergeordneten Lenkwinkel aufbringen muß. Dabei ist eine Kommutierung notwendig, die neben einem höheren Bauaufwand auch eine unerwünschte Momentenschwankung mit sich bringt. Weiter muß beim Zusammenbau die Ventilnullage hydraulisch und elektromagnetisch balanciert werden. Der große Vorteil dieser beiden Ausführungsformen mit gehäusefesten Spulen ist allerdings der Wegfall von Schleifern oder einer Kabelschleife zur Stromversorgung.

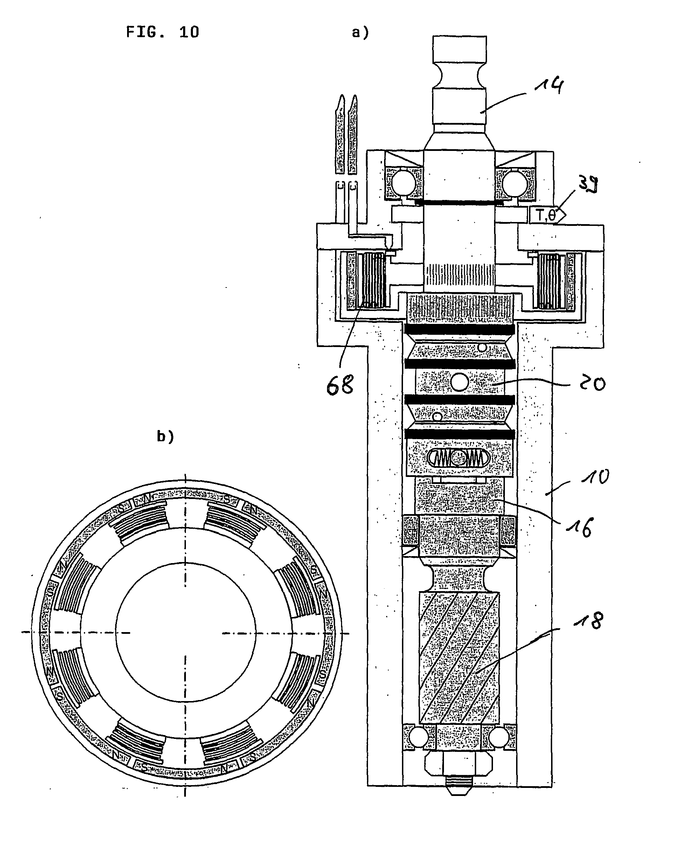

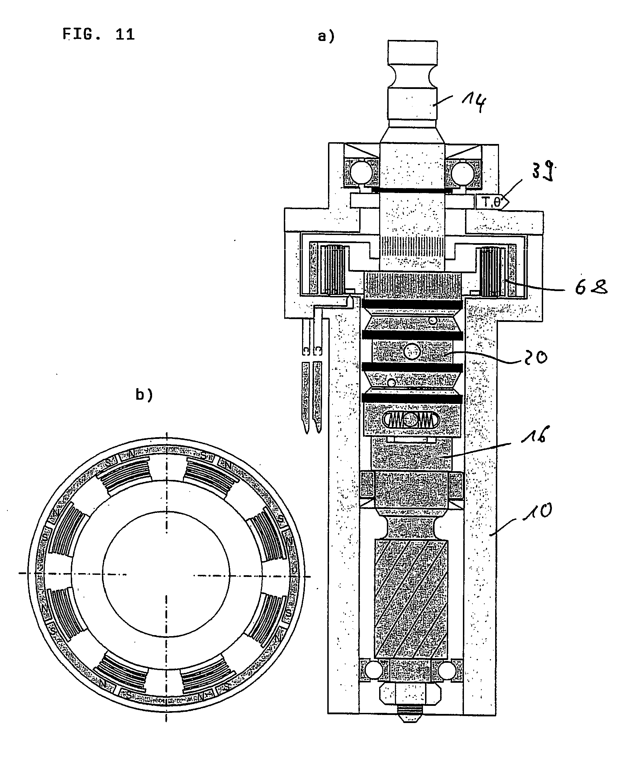

Alternative Ausführungsformen ergeben sich, wenn einer der Rotoren an der Eingangswelle 14 angebracht ist. Bei der Ausführungsform von Fig. 10 sind die Spulen an der Eingangswelle angebracht, und bei der Ausführungsform gemäß Fig. 11 sind die Permanentmagnete fest an der Eingangswelle angebracht. Das Stellmoment der Antriebsvorrichtung 68 verdreht die Ventilhülse 20 gegenüber der Welle 16 und der Eingangswelle 14. Das Reaktionsmoment stützt sich über die Eingangswelle und die Lenksäule beim Fahrer ab. Dieses mechanische Zusatzmoment kann gleichsinnig zum mechanisch-hydraulischen Zusatzmoment sein, daß über die Ventilverstellung erzielt wird. Dies ist vorteilhaft im Bereich kleiner Ventilauslenkungen, wodurch das geringe Druckniveau die möglichen mechanisch-hydraulischen Unterstützungsmomente geringer sind. Der Momentensteller muß hierbei grundsätzlich den gesamten Ventilarbeitsbereich von etwa plus minus 6° abdecken. Da hier die Auslenkung des Momentenstellers der gesamten Ventilauslenkung entspricht, besteht grundsätzlich die Möglichkeit, diese Auslenkung zur Momentenmessung zu nutzen. Die relative Verschiebung der Spulen zum Magnetfeld bewirkt eine Veränderung der elektromagnetischen Eigenschaften, was z. B. eine veränderte Stromanstiegsgeschwindigkeit bewirkt. Eine Sensierung dieser oder anderer Größen kann zur Verdrehwinkelbestimmung und zur Momentenbestimmung genutzt werden. Bezüglich des Bauraums ist die Anordnung der Antriebsvorrichtung oberhalb des Ventils günstiger als die Anordnung unterhalb des Ventils.

## Patentansprüche

1. Ventil (12) für eine hydraulische Servolenkung, mit einem ersten Ventilelement und einem zweiten Ventilelement, die mittels eines Torsionsstabes miteinander verbunden sind und aus einer Mittellage in die eine oder andere Richtung relativ zueinander begrenzt verdrehbar sind, um eine Lenkunterstützung zu erzeugen, wobei eines der Ventilelemente (20) aus einer Neutrallage in die eine oder andere Richtung relativ zu einer ihm zugeordneten Welle (16) verdrehbar ist, wobei ein Kopplungsmechanismus (26) vorgesehen ist, der die Verdrehung des Ventilelements (20) relativ zur Welle (16) begrenzt und das Ventilelement (20) in die Neutrallage beaufschlagt, und wobei eine Antriebsvorrichtung (34; 58) vorgesehen ist, die auf das dem Kopplungsmechanismus (26) zugeordnete Ventilelement (20) einwirken kann, um es relativ zur Welle (16) aus der Neutralstellung in die eine oder andere Richtung zu verdrehen.

2. Ventil nach Anspruch 1, **dadurch gekennzeichnet, daß** der Kopplungsmechanismus (26) mindestens eine Feder (32; 54) aufweist, die das ihm zugeordnete Ventilelement (20) in die Neutrallage beaufschlagen.

3. Ventil nach Anspruch 2, **dadurch gekennzeichnet, daß** der Kopplungsmechanismus (26) zwei Federn (32) aufweist, die in der Umfangsrichtung der Welle (16) wirken.

4. Ventil nach Anspruch 3, **dadurch gekennzeichnet, daß** das dem Kopplungsmechanismus (26) zugeordnete Ventilelement (20) mit einem Anschlag (30) versehen ist, daß an der Welle zwei Widerlager (28) vorgesehen sind, von denen eines auf der einen und das andere auf der anderen Seite des Anschlags (30) angeordnet ist, und daß eine der beiden Federn (32) zwischen dem einen Widerlager (28) und dem Anschlag (30) und die andere Feder (32) zwischen dem Anschlag (30) und dem anderen Widerlager (28) angeordnet ist.

5. Ventil nach Anspruch 2, **dadurch gekennzeichnet, daß** der Kopplungsmechanismus (26) zwei Federn (54) aufweist, die parallel zur Längsachse der Welle (16) wirken.

6. Ventil nach Anspruch 5, **dadurch gekennzeichnet, daß** das dem Kopplungsmechanismus (26) zugeordnete Ventilelement (20) mit einem Schlitz (50) versehen ist, der schräg zur Längsrichtung der Welle (16) ausgerichtet ist, daß die Welle (16) mit einem Zapfen (52) versehen ist, der in den Schlitz (50) eingreift, und daß die beiden Federn (54) jeweils zwischen einer axialen Stirnseite des Ventilelements (20) und einem gegenüberliegenden Widerlager (56) angeordnet sind.

7. Ventil nach Anspruch 5, **dadurch gekennzeichnet, daß** das dem Kopplungsmechanismus (26) zugeordnete Ventilelement (20) mit einem Zapfen versehen ist, daß die Welle (16) mit einem Schlitz versehen ist, der schräg zur Längsrichtung der Welle (16) ausgerichtet ist und in den der Zapfen eingreift, und daß die beiden Federn (54) jeweils zwischen einer axialen Stirnseite des Ventilelements (20) und einem gegenüberliegenden Widerlager (56) angeordnet sind.

8. Ventil nach Anspruch 6 oder Anspruch 7, **dadurch gekennzeichnet, daß** der Winkel zwischen der Längsrichtung des Schlitzes (50) und der Längsachse der Welle (16) weniger als 45° beträgt.

9. Ventil nach Anspruch 1, **dadurch gekennzeichnet, daß** der Kopplungsmechanismus (26) einen Federring (40) aufweist.

10. Ventil nach Anspruch 9, **dadurch gekennzeichnet, daß** der Federring (40) mehrere Laschen (42) aufweist und an der Welle (16) angebracht ist und daß das dem Kopplungsmechanismus zugeordnete Ventilelement (20) mehrere Nasen (44) aufweist, die mit den Laschen (42) zusammenwirken.

11. Ventil nach Anspruch 10, **dadurch gekennzeichnet, daß** der Federring (40) aus einem Elastomer- oder Kunststoffmaterial besteht.

12. Ventil nach einem der vorhergehenden Ansprüche, **dadurch gekennzeichnet, daß** die Antriebsvorrichtung einen Elektromotor (34) aufweist.

13. Ventil nach einem der Ansprüche 1 bis 11, **dadurch gekennzeichnet, daß** die Antriebsvorrichtung mindestens eine Spule (58) aufweist.

14. Ventil nach einem der vorhergehenden Ansprüche, **dadurch gekennzeichnet, daß** die Antriebsvorrichtung (68) einen Spulenhalter und einen Permanentmagnet-Halter aufweist.

15. Ventil nach Anspruch 14, **dadurch gekennzeichnet, daß** einer der Halter fest mit einem der Ventilelemente (20) und der andere Halter fest mit der Welle (16) verbunden ist.

16. Ventil nach Anspruch 14, **dadurch gekennzeichnet, daß** einer der Halter fest mit dem Ventilelement (20) verbunden ist und der andere Halter fest mit dem Gehäuse des Ventils verbunden ist.

17. Ventil nach Anspruch 14, **dadurch gekennzeichnet, daß** einer der Halter fest mit der Eingangswelle (14) verbunden ist und der andere Halter fest mit dem Ventilelement (20) verbunden ist.

18. Ventil nach einem der vorhergehenden Ansprüche, **dadurch gekennzeichnet, daß** der Kopplungsmechanismus (26) die Verdrehung des Ventilelements (20) relativ zur Welle (16) auf einen Winkelbereich von maximal 3° in jeder Richtung begrenzt.

19. Ventil nach einem der vorhergehenden Ansprüche, **dadurch gekennzeichnet, daß** die Welle die Ausgangswelle (16) des Ventils (12) ist und mit einem Ritzel (18) verbunden ist, das Teil eines Lenkgetriebes ist.

20. Ventil nach einem der vorhergehenden Ansprüche, **dadurch gekennzeichnet, daß** die vom Kopplungsmechanismus erzeugten Rückstellkräfte in die Neutrallage so groß sind, daß sie das dem Kopplungsmechanismus zugeordnete Ventilelement (20) in der Neutrallage halten, wenn auf diese Ventilelement keine Kräfte von der Antriebsvorrichtung ausgeübt werden.

## Claims

1. A valve (12) for a hydraulic power steering, comprising a first valve element and a second valve element which are connected with each other by means of a torsion bar and can be rotatably displaced relative to each other to a limited extent from a central position in the one or the other direction to generate a steering assistance, one of the valve elements (20) being adapted to be rotatably displaced from a neutral position into the one or the other direction relative to a shaft (16) associated with it, a coupling mechanism (26) being provided which limits the displacement in rotation of the valve element (20) relative to the shaft (16) and urges the valve element (20) into the neutral position, and a drive device (34; 58) being provided which can act on the valve element (20) associated with the coupling mechanism (26) to displace the valve element (20) in rotation relative to the shaft (16) from the neutral position into the one or the other direction.

2. The valve as claimed in claim 1, **characterized in that** the coupling mechanism (26) has at least one spring (32; 54) urging the valve element (20) associated with it into the neutral position.

3. The valve as claimed in claim 2, **characterized in that** the coupling mechanism (26) has two springs (32) which act in the peripheral direction of the shaft (16).

4. The valve as claimed in claim 3, **characterized in that** the valve element (20) associated with the coupling mechanism (26) is provided with a stop (30), that provided at the shaft are two abutments (28) one of which is disposed on the one side and the other on the other side of the stop (30), and that one of the two springs (32) is disposed between one abutment (28) and the stop (30) and the other spring (32) is disposed between the stop (30) and the other abutment (28).

5. The valve as claimed in claim 2, **characterized in that** the coupling mechanism (26) has two springs (54) which act parallel to the longitudinal axis of the shaft (16).

6. The valve as claimed in claim 5, **characterized in that** the valve element (20) associated with the coupling mechanism (26) is provided with a slot (50) which is oriented at an angle with respect to the longitudinal direction of the shaft (16), that the shaft (16) is provided with a pin (52) which engages in the slot (50), and that the two springs (54) are each disposed between an axial end face of the valve element (20) and an opposed abutment (56).

7. The valve as claimed in claim 5, **characterized in that** the valve element (20) associated with the coupling mechanism (26) is provided with a pin, that the shaft (16) is provided with a slot which is oriented at an angle with respect to the longitudinal direction of the shaft (16) and in which the pin engages, and that the two springs (54) are each disposed between an axial end face of the valve element (20) and an opposed abutment (56).

8. The valve as claimed in claim 6 or claim 7, **characterized in that** the angle between the longitudinal direction of the slot (50) and the longitudinal axis of the shaft (16) is less than 45°.

9. The valve as claimed in claim 1, **characterized in that** the coupling mechanism (26) has a spring washer (40).

10. The valve as claimed in claim 9, **characterized in that** the spring washer (40) has a plurality of tabs (42) and is mounted at the shaft (16), and that the valve element (20) associated with the coupling mechanism has a plurality of lugs (44) which cooperate with the tabs (42).

11. The valve as claimed in claim 10, **characterized in that** the spring washer (40) is made of an elastomer or plastic material.

12. The valve as claimed in any of the preceding claims, **characterized in that** the drive device has an electric motor (34).

13. The valve as claimed in any of claims 1 to 11, **characterized in that** the drive device has at least one coil (58).

14. The valve as claimed in any of the preceding claims, **characterized in that** the drive device (68) has a coil holder and a permanent magnet holder.

15. The valve as claimed in claim 14, **characterized in that** one of the holders is firmly connected with one of the valve elements (20) and the other holder is firmly connected with the shaft (16).

16. The valve as claimed in claim 14, **characterized in that** one of the holders is firmly connected with the valve element (20) and the other holder is firmly connected with the housing of the valve.

17. The valve as claimed in claim 14, **characterized in that** one of the holders is firmly connected with the input shaft (14) and the other holder is firmly connected with the valve element (20).

18. The valve as claimed in any of the preceding claims, **characterized in that** the coupling mechanism (26) limits the displacement in rotation of the valve element (20) relative to the shaft (16) to an angular range of a maximum of 3° in each direction.

19. The valve as claimed in any of the preceding claims, **characterized in that** the shaft is the output shaft (16) of the valve (12) and is connected with a pinion (18) which is part of a steering gear.

20. The valve as claimed in any of the preceding claims, **characterized in that** the restoring forces produced by the coupling mechanism and urging into the neutral position are so large that they hold the valve element (20) associated with the coupling mechanism in the neutral position if no forces are exerted on this valve element by the drive device.

## Revendications

1. Soupape (12) pour une direction assistée hydraulique, comportant un premier élément de soupape et un deuxième élément de soupape qui sont reliés l'un à l'autre au moyen d'une barre de torsion et qui peuvent tourner de façon limitée l'un par rapport à l'autre depuis une position médiane dans un sens ou dans l'autre pour engendrer une assistance de direction, l'un des éléments de soupape (20) pouvant tourner depuis une position neutre dans un sens ou dans l'autre par rapport à un arbre (16) qui lui est associé, dans laquelle est prévu un mécanisme d'accouplement (26) qui limite la rotation de l'élément de soupape (20) par rapport à l'arbre (16) et sollicite l'élément de soupape (20) dans la position neutre, et dans laquelle est prévu un dispositif d'entraînement (34 ; 58) qui peut agir sur l'élément de soupape (20) associé au mécanisme d'accouplement (26) pour le faire tourner depuis la position neutre dans un sens ou dans l'autre par rapport à l'arbre (16).

2. Soupape selon la revendication 1, **caractérisée en ce que** le mécanisme d'accouplement (26) présente au moins un ressort (32 ; 54) qui sollicite l'élément de soupape (20) qui lui est associé dans la position neutre.

3. Soupape selon la revendication 2, **caractérisée en ce que** le mécanisme d'accouplement (26) présente deux ressorts (32) qui agissent dans le sens circonférentiel de l'arbre (16).

4. Soupape selon la revendication 3, **caractérisée en ce que** l'élément de soupape (20) associé au mécanisme d'accouplement (26) est pourvu d'une butée (30), **en ce que** sur l'arbre sont prévus deux contre-appuis (28) dont l'un est agencé d'un côté et l'autre de l'autre côté de la butée (30), et **en ce qu'**un des deux ressorts (32) est agencé entre l'un des contre-appuis (28) et la butée (30) et l'autre ressort (32) est agencé entre la butée (30) et l'autre contre-appui 828).

5. Soupape selon la revendication 2, **caractérisée en ce que** le mécanisme d'accouplement (26) présente deux ressorts qui agissent parallèlement à l'axe longitudinal de l'arbre (16).

6. Soupape selon la revendication 5, **caractérisée en ce que** l'élément de soupape (20) associé au mécanisme d'accouplement (26) est pourvu d'une fente (50) qui est orientée en oblique par rapport à la direction longitudinale de l'arbre (16), **en ce que** l'arbre (16) est pourvu d'un tenon (52) qui s'engage dans la fente (40), et **en ce que** les deux ressorts (54) sont chacun agencés entre une face frontale axiale de l'élément de soupape (20) et un contre-appui opposé (56).

7. Soupape selon la revendication 5, **caractérisée en ce que** l'élément de soupape (20) associé au mécanisme d'accouplement (26) est pourvu d'un tenon, **en ce que** l'arbre (16) est pourvu d'une fente qui est orientée en oblique par rapport à la direction longitudinale de l'arbre et dans laquelle s'engage le tenon, et **en ce que** les deux ressorts (54) sont chacun agencés entre une face frontale axiale de l'élément de soupape (20) et un contre-appui opposé (56).

8. Soupape selon la revendication 6 ou la revendication 7, **caractérisée en ce que** l'angle entre la direction longitudinale de la fente (50) et l'axe longitudinal de l'arbre (16) est inférieur à 45°.

9. Soupape selon la revendication 1, **caractérisée en ce que** le mécanisme d'accouplement (26) présente une rondelle élastique (40).

10. Soupape selon la revendication 9, **caractérisée en ce que** la rondelle élastique (40) présente plusieurs pattes (42) et est montée sur l'arbre (16), et **en ce que** l'élément de soupape (20) associé au mécanisme d'accouplement (26) présente plusieurs ergots (44) qui coopèrent avec les pattes (42).

11. Soupape selon la revendication 10, **caractérisée en ce que** la rondelle élastique (40) est en un matériau élastomère ou une matière plastique.

12. Soupape selon l'une des revendications précédentes, **caractérisée en ce que** le dispositif d'entraînement présente un moteur électrique (34).

13. Soupape selon l'une des revendications 1 à 11, **caractérisée en ce que** le dispositif d'entraînement présente au moins un self (58).

14. Soupape selon l'une des revendications précédentes, **caractérisée en ce que** le dispositif d'entraînement (68) présente un support de selfs et un support d'aimants permanents.

15. Soupape selon la revendication 14, **caractérisée en ce que** l'un des supports est relié de façon solidaire à l'un des éléments de soupape (20), et l'autre support est relié de façon solidaire à l'arbre (16).

16. Soupape selon la revendication 14, **caractérisée en ce que** l'un des supports est relié de façon solidaire à l'un des éléments de soupape (20), et l'autre support est relié de façon solidaire au boîtier de la soupape.

17. Soupape selon la revendication 14, **caractérisée en ce que** l'un des supports est relié de façon solidaire à l'arbre menant (14), et l'autre support est relié de façon solidaire à l'élément de soupape (20).

18. Soupape selon l'une des revendications précédentes, **caractérisée en ce que** le mécanisme d'accouplement (26) limite la rotation de l'élément de soupape (20) par rapport à l'arbre (16) sur une plage angulaire d'au maximum 3° dans chaque sens.

19. Soupape selon l'une des revendications précédentes, **caractérisée en ce que** l'arbre est l'arbre mené (16) de la soupape (12) et est relié à un pignon (18) qui fait partie d'une boîte de direction.

20. Soupape selon l'une des revendications précédentes, **caractérisé en ce que** les forces de rappel dans la position neutre, engendrées par le mécanisme d'accouplement, sont si grandes qu'elles maintiennent l'élément de soupape (20) associé au mécanisme d'accouplement dans la position neutre lorsque aucune force n'est exercée par le dispositif d'entraînement sur cet élément de soupape.
